# EUROPEAN PATENT APPLICATION

(11) **EP 3 150 615 A1**
(43) Date of publication of application: **05.04.2017**
(21) Application number: 15187825.3
(22) Date of filing: 01.10.2015
(51) Int. Cl.: C07G 1/00, C10G 3/00

(54) **METHOD FOR PREPARTION OF NOVEL MODIFIED BIO BASED MATERIALS**

(71) Applicant: BIOeCON International Holding N.V., 3871 KM Hoevelaken (NL)
(72) Inventor: O'Connor, Paul, 3871KM Hoevelaken (NL); Babich, Igor, 7545 GM Enschede (NL); Heinerman, Jacobus Johannes Leonardus, 1391 AC Abcoude (NL); XU, Lixian, 5652 VH Eindhoven (NL); VAN DEN BERGH, Johan, 3315 MA Dordrecht (NL)

(57) **Abstract**

The present invention relates generally to the method for production of ligno-oligomers and or lignin at low temperatures with reduced particle size (< 1000 microns) and modified physical and chemical properties, suitable for further processing into fuels, chemicals and/or advanced materials.

## Description

### Technical Field

The main advantages of this technology are:
Particle Size reduction: From > 1 mm, ±1000-3000µ to less than 100µ.
Enhanced reactivity: Cellulose liquefaction T> 350°C to less than 200°C.
Minerals removal: Removal of K, Ca, Fe (Catalyst poisons)

### Summary of invention

The invention relates generally to the method for production of ligno-oligomers and or lignin with reduced particle size (< 1000 microns) and modified physical and chemical properties, suitable for further processing. Ligno-oligomers are (hemi)cellulosic oligomers and mixtures of lignin and (hemi)cellulosic oligomers, and (hemi)cellulosic oligomers are hemicellulosic oligomers and cellulosic oligomers and mixtures of hemicellulosic oligomers and cellulosic oligomers.

### Description of embodiments

As Inorganic solvent an inorganic molten salt hydrate, e.g. ZnCl2.nH2O can be used.

Optionally mixtures of molten salt hydrates can be used.

As anti-solvent water (H2O) is used.

Optionally also organic anti-solvents such as but not limited to alcohols, can be used.

Materials produced (Lignin, Ligno-Oligomers) can be used for production of polymers, building materials, binders, food applications, fillers, and/or textiles.

Materials produced (Lignin, Ligno-Oligomers) can also be applied for further biomass conversion processes to produce fuels and chemicals.

Dissolved minerals can be removed from solvent and / or anti-solvent.

The ZnCl2.n4H2O solvent is used at ZnCl2 concentrations less than 70%.

The temperature of performed dissolution is below 100° C.

The ZnCl2.nH2O acidity can be controlled by modifying the ZnO/ZnCl2 content.

Increasing the ZnO/ZnCl2 ratio will reduce the hydrolysis of the oligomers to sugars and hence increase the oligomers yield, while at the same time ZnO acts as a corrosion inhibitor.

### Industrial applicability

Based on this we foresee applications of this technology in several areas, such as improved biomass feedstock for:
Catalytic Pyrolysis (Solids);
Gasification (Solids);
Enzymatic conversion (Solids/Liquid);
HTU/Bio-crack and FCC (Dispersed solids/Liquid);
Advanced Materials such as: biomass based polymers and plastics, building materials, binders, new types of wood and Textiles. New food constituents.

These advanced materials are also particularly suitable for molding as for instance in 3D printing.

In a specific embodiment the new materials produced can be combined with inorganic flame retardants such as certain Aluminas and modified Aluminas (modified with Mg, Zn, Ca, Ba or oxides thereof) to yield Flame retardant (FR) materials for application as FR building materials, FR polymers and FR textiles.

## Claims

1. Process for the production of ligno-oligomers comprising the steps of:
a) dissolution of cellulose and hemi-cellulose fraction of biomass making use of an inorganic molten salt hydrate as an inorganic solvent.
b) Precipitation of the dissolved (hemi-cellulose) by adding an anti-solvent (e.g. H2O and / or an organic anti-solvent).
c) Precipitation on Lignin fraction forming ligno-oligomers.

2. The process of claim 1 wherein fractions of lignin and oligomers are separately precipitated.

3. The process of claims 1 - 2 wherein solvent is separated or partially separated from dissolution containing the anti-solvent.

4. The process of claim 1-3 wherein solvent can be recovered

5. The solvent of claim 4 can be reused as the solvent in claim 1.

6. The process of claims 1-5 preformed at temperatures below 100°C.

7. The applications of these materials for further conversion into fuels and chemicals

8. The applications of these materials for further conversion into fuels and chemicals by thermo-catalytic and/or enzymatic processes.

9. The application of these materials as advanced Materials such as: biomass based polymers and plastics, building materials, binders, new types of wood and Textiles and/ or new food constituents.
